# FASCICULE DE BREVET EUROPEEN

(11) **EP 3 488 227 B1**
(45) Date de publication et mention de la délivrance du brevet: **13.05.2020**
(21) Numéro de dépôt: 17751434.6
(22) Date de dépôt: 11.07.2017
(51) Int. Cl.: G01N 21/64, G02B 21/14

(54) **SYSTÈME ET PROCÉDÉ DE MESURE D'UN PARAMÈTRE PHYSIQUE D'UN MILIEU**
SYSTEM UND VERFAHREN ZUR MESSUNG EINES PHYSIKALISCHEN PARAMETERS EINES MEDIUMS
SYSTEM AND METHOD FOR MEASURING A PHYSICAL PARAMETER OF A MEDIUM

(30) Priorité: 25.07.2016 FR 1657130
(43) Date de publication de la demande: 29.05.2019
(73) Titulaire: CENTRE NATIONAL DE LA RECHERCHE SCIENTIFIQUE -CNRS-, 75016 Paris (FR); Ecole Supérieure de Physique et de Chimie Industrielles de la Ville de Paris, 75005 Paris (FR)
(72) Inventeur: FORT, Emmanuel, 94230 CACHAN (FR); LEVEQUE-FORT, Sandrine, 94230 CACHAN (FR); BOURG, Nicolas, 94200 IVRY SUR SEINE (FR)
(74) Mandataire: Priori, Enrico
(86) Numéro de dépôt international: PCT/FR2017/051901
(87) Numéro de publication internationale: WO 2018/020098

(56) Documents cités:
- KR-A- 20130 115 891
- US-A- 5 457 536
- US-A1- 2014 367 590
- NOUR HAFI ET AL: "Fluorescence nanoscopy by polarization modulation and polarization angle narrowing", NATURE METHODS, vol. 11, no. 5, 1 janvier 2015 (2015-01-01), pages 579-584, XP055377302, ISSN: 1548-7091, DOI: 10.1038/nmeth.2919

## Description

La présente invention est relative aux systèmes et procédés de mesure de paramètre physique dans un milieu.

L'invention peut notamment trouver une application dans le domaine de l'imagerie et de la microscopie optique super-résolue.

D'autres domaines d'applications peuvent être envisagés, notamment dans le domaine de l'acoustique et des ondes radiofréquences par exemple.

Une technique de microscopie optique super-résolue, appelée microscopie optique de fluorescence super-résolue, consiste à mesurer la position et les caractéristiques physiques de fluorophores intégrés dans le milieu observé.

Les fluorophores sont des émetteurs de lumière nanoscopiques excitables qui, lorsqu'ils sont excités par une lumière incidente, émettent un certain nombre de photons avant de s'autodétruire. Les méthodes de super-résolution optique ont pour objectif de capter ces photons de sorte à localiser et/ou caractériser les fluorophores avant que ces derniers ne s'autodétruisent.

Des techniques connues de microscopie de super-localisation sont par exemple les méthodes « PALM » (acronyme anglo-saxon pour « Photo-Activation Localization Microscopy ») ou « STORM » (acronyme anglo-saxon pour « Stochastic Optical Reconstruction Microscopy »).

Ces techniques ont pour point commun d'activer un petit nombre de fluorophores dans le milieu de sorte à pouvoir zoomer fortement sur un fluorophore unique et déterminer le centre de la tâche focale générée par ledit fluorophore.

Ces techniques d'observations permettent ainsi d'observer les structures intracellulaires avec une précision de l'ordre de la dizaine de nanomètres.

Ces techniques présentent toutefois des inconvénients.

Ainsi la précision de la position obtenue par mesure du centre de la tâche focal est limitée et fonction de la racine carrée du nombre de photons reçus du fluorophore. Par ailleurs, l'émission provenant d'un émetteur dipolaire immobile en rotation, comme certains fluorophore, est anisotrope et fonction de la polarisation de la lumière excitatrice. Ceci induit une incertitude sur la position du fluorophore obtenue. Par ailleurs, la nécessité de zoomer sur le fluorophore pour visualiser la tâche focale limite de manière importante la taille du champ d'observation.

La présente invention a pour but d'améliorer cette situation. La présente invention est particulièrement intéressante dans le cas d'un milieu émettant un nombre limité de photons, notamment dans un temps très court, par exemple dans le cas d'émetteurs dit « uniques », c'est-à-dire d'émetteurs avec une durée de vie limitée suffisamment espacés les uns des autres pour pouvoir être distingués optiquement les uns des autres. La présente invention permet en effet de collecter une portion importante des photons émis par le milieu et d'obtenir ainsi des informations précises sur les caractéristiques physiques du milieu. La présente invention n'est toutefois par limitée au champ d'application de la microscopie optique super-résolue mais peut trouver une application dans de nombreux autres domaines comme par exemple l'acoustique ou les ondes radiofréquences par exemple.
Les documents: "Fluorescence nanoscopy by polarization modulation and polarization angle narrowing",Nour Hafi et al, NATURE METHODS, vol. 11, no. 5, pages 579-584 (2015) et US 2014/367590 A1 enseignent un procédé selon le préambule de la revendication 1 et un système selon la préambule de la revendication 9.

A cette effet, l'invention a pour premier objet un procédé de mesure d'un paramètre physique d'une région cible d'un milieu, :
on émet une onde d'excitation en au moins une région cible d'un milieu, de telle sorte que ladite onde présente, à l'endroit de ladite région cible, une modulation périodique dans le temps d'au moins caractéristique physique avec une période temporelle prédéfinie,
on reçoit une onde de retour de ladite région cible, émise en réponse à l'onde d'excitation,
on défléchit périodiquement ladite onde de retour en une onde défléchie, au moyen d'un élément défléchissant contrôlable, de sorte à ce que ladite onde défléchie balaye un réseau de transducteurs à chaque période de la modulation périodique, chaque transducteur du réseau de transducteurs étant associé à une plage de phase prédéfinie de ladite modulation périodique,
on enregistre une image de phase comprenant des signaux générés par chaque transducteur du réseau de transducteurs, en réponse à l'onde défléchie, pendant au moins une période de la modulation périodique,
on détermine, à partir de ladite image de phase, un décalage de phase entre une modulation périodique dans le temps d'au moins caractéristique physique de l'onde de retour et la modulation périodique dans le temps d'au moins caractéristique physique de l'onde d'excitation,
on détermine un paramètre physique de ladite région cible à partir dudit décalage de phase.

Dans des modes de réalisation préférés de l'invention, on peut éventuellement avoir recours en outre à l'une et/ou à l'autre des dispositions suivantes :
- les ondes sont des ondes électromagnétiques, notamment des ondes lumineuses;
- les transducteurs sont des photodétecteurs, notamment une caméra;
- la modulation périodique dans le temps d'au moins caractéristique physique est une modulation périodique dans le temps de la polarisation de l'onde d'excitation et le paramètre physique de ladite région cible est une information d'orientation d'un émetteur de lumière présent dans ladite région cible, notamment un fluorophore;
- la modulation périodique dans le temps d'au moins caractéristique physique est une modulation périodique dans le temps de l'amplitude de l'onde d'excitation et le paramètre physique de ladite région cible est une information de temps de vie ou une information de position d'un émetteur de lumière présent dans ladite région cible, notamment un fluorophore;
- pour émettre l'onde d'excitation, on génère une onde modulée spatialement dans le milieu et on déplace ladite onde modulée spatialement dans le milieu, notamment avec une vitesse prédéfinie constante,
   en particulier on génère une onde électromagnétique modulée spatialement dans le milieu en générant une figure d'interférence entre deux faisceaux laser dans le milieu;
- on émet ladite onde d'excitation, de telle sorte que ladite onde présente, à l'endroit de ladite région cible, une pluralité de modulations périodique dans le temps d'au moins caractéristique physique, avec une pluralité de périodes temporelle prédéfinies respectivement associées à chaque modulations périodique de ladite pluralité de modulations périodique,
   on défléchit périodiquement l'onde de retour en une onde défléchie de sorte à ce que chaque transducteur du réseau de transducteurs soit associé à une plage de phase prédéfinie de chaque modulation périodique de ladite pluralité de modulations périodique,
   on détermine une pluralité de décalages de phase du milieu, chaque décalage de phase de la pluralité de décalages de phase étant respectivement déterminé entre une modulation périodique dans le temps d'au moins caractéristique physique de l'onde de retour et une modulation périodique dans le temps d'au moins caractéristique physique respective de l'onde d'excitation,
   et on détermine une pluralité de paramètres physiques de ladite région cible à partir de ladite pluralité de décalages de phase;
- ladite pluralité de paramètres physiques de ladite région cible comprend au moins une information de position et/ou d'orientation et/ou de temps de vie d'un émetteur de lumière présent dans ladite région cible, notamment un fluorophore.

L'invention a également pour objet un système de mesure d'un paramètre physique d'une région cible d'un milieu comprenant :
une source d'onde d'excitation apte à émettre une onde d'excitation en au moins une région cible d'un milieu, de telle sorte que ladite onde présente, à l'endroit de ladite région cible, une modulation périodique dans le temps d'au moins caractéristique physique avec une période temporelle prédéfinie,
un réseau de transducteurs,
un élément défléchissant contrôlable apte à défléchir périodiquement, en une onde défléchie, une onde de retour de ladite région cible émise en réponse à l'onde d'excitation,
de sorte à ce que ladite onde défléchie balaye le réseau de transducteurs à chaque période de la modulation périodique, chaque transducteur du réseau de transducteurs étant associé à une plage de phase prédéfinie de ladite modulation périodique,
un module de traitement comportant :
   une mémoire apte à enregistrer une image de phase comprenant les signaux générés par chaque transducteur du réseau de transducteurs, en réponse à l'onde défléchie, pendant au moins une période de la modulation périodique,
   un processeur apte à déterminer, à partir de ladite image de phase, un décalage de phase de l'onde de retour issue de ladite région cible par rapport à une phase de la modulation périodique de l'onde d'excitation, et de déterminer un paramètre physique de ladite région cible à partir dudit décalage de phase.

Dans des modes de réalisation préférés de l'invention, on peut éventuellement avoir recours en outre à l'une et/ou à l'autre des dispositions suivantes :
- l'élément défléchissant contrôlable est un miroir rotatif;
- l'élément défléchissant contrôlable est un système fixe comprenant au moins un élément de contrôle de polarisation, notamment un élément optique à biréfringence induite en particulier à biréfringence induite par un champ électrique, un champ magnétique ou une contrainte mécanique.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un système de mesure d'un paramètre physique d'une région cible d'un milieu selon un mode de réalisation de l'invention,
- la figure 2 est un organigramme illustrant un mode de réalisation d'un procédé de mesure d'un paramètre physique d'une région cible d'un milieu selon un mode de réalisation de l'invention,
- la figure 3 est une vue schématique d'une variante de réalisation du système de la figure 1.

Sur les différentes figures, les mêmes références désignent des éléments identiques ou similaires.

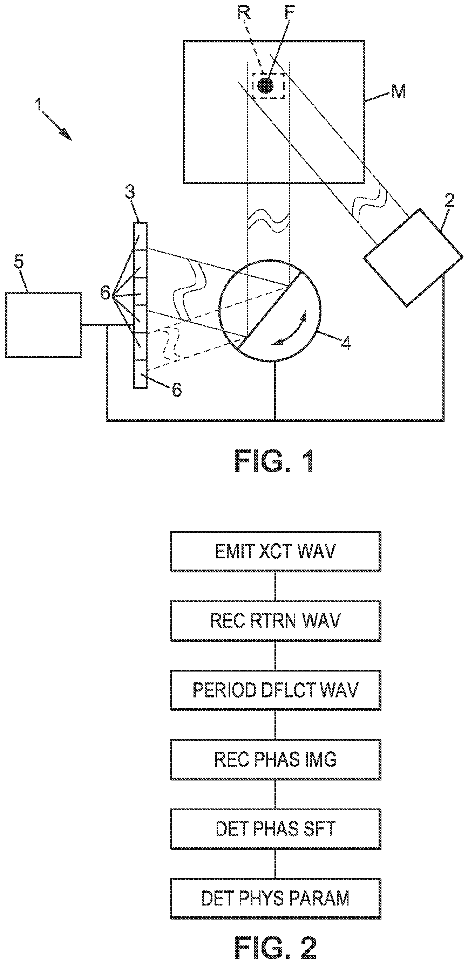

La figure 1 illustre un système 1 de mesure d'un paramètre physique d'une région cible d'un milieu selon un mode de réalisation de l'invention.

Suivant les modes de réalisation de l'invention, les ondes mentionnés dans la présente description pourront être des ondes optiques, acoustiques ou électromagnétiques.

Les ondes optiques sont par exemple des ondes appartenant aux domaines du visible, de l'infrarouge et/ou de l'ultraviolet.

Les ondes électromagnétiques sont par exemple des ondes radiofréquences ou térahertz, par exemple présentant une fréquence centrale comprise entre quelques mégahertz et quelques térahertz.

Les ondes acoustiques peuvent par exemple être des ondes ultrasonores, par exemple des ondes présentant une fréquence centrale pouvant être comprise entre 200kHz et 100 Mhz, par exemple entre 0.5 Mhz et 10 Mhz.

Tous les éléments du dispositif 1 sont adaptés et choisis par l'homme du métier en fonction du type et de la fréquence des ondes en question.

Ainsi, par exemple, les éléments d'émission et de réception, les fenêtres de transmission, la cavité réfléchissante et autres éléments réfléchissants, le milieu diffuseurs et les diffuseurs, les lentilles et les éléments de focalisation et tout autre élément employé dans le dispositif de focalisation d'impulsions 1 et le procédé de focalisation sont adaptés respectivement au type et à la fréquence des ondes et/ou des impulsions choisies par l'homme du métier.

Le système 1 représenté sur la figure 1 comprend une source 2 d'onde d'excitation, un réseau de transducteurs 3, un élément défléchissant contrôlable 4 et un module de traitement 5.

Le module de traitement 5 comporte par exemple un processeur et une mémoire et est apte à contrôler la source 2, le réseau de transducteurs 3 et l'élément défléchissant contrôlable 4.

Le système 1 est par exemple destiné par exemple à réaliser une imagerie optique à super-résolution d'un fluorophore F présent dans une région cible R d'un milieu M.

Par « imagerie optique à super-résolution », on entend par exemple que le système 1 est apte à déterminer une information de position du fluorophore F dans la région cible R avec une résolution supérieure à la limite de diffraction.

Par « une information de position du fluorophore dans la région cible », on entend par exemple une information de position relative du fluorophore selon au moins une direction spatiale, par exemple une quantité Δx indiquant une position relative du fluorophore par rapport à une référence de position selon une direction spatiale X.

La source 2 d'onde d'excitation est apte à émettre une onde d'excitation dans la région cible R.

La source 2 est en particulier apte à émettre ladite onde d'excitation de telle sorte que ladite onde présente, à l'endroit de la région cible R, une modulation périodique dans le temps d'au moins caractéristique physique avec une période temporelle prédéfinie.

Dans un mode de réalisation de l'invention, les ondes, et notamment l'onde d'excitation, sont ainsi des ondes électromagnétiques et en particulier des ondes lumineuses. L'onde d'excitation est par exemple une onde cohérente issue d'au moins un laser.

La région cible R peut être de dimensions variables. Dans un mode de réalisation de l'invention, la région cible R peut par exemple présenter des dimensions proche de celles d'un fluorophore. Dans d'autres modes de réalisation de l'invention, la région cible R peut couvrir un champ plus important.

Par « ladite onde présente, à l'endroit de la région cible, une modulation périodique dans le temps d'au moins caractéristique physique », on entend que, en chaque point P de la région cible R, ladite caractéristique physique de l'onde d'excitation est modulée périodiquement dans le temps. Les modulations de la caractéristique physique de l'onde d'excitation en chaque point P de la région cible R peuvent être en phase ou présenter des décalages de phases de sorte par exemple à ce que l'onde excitatrice présente également une périodicité spatiale.

Ainsi dans un mode de réalisation de l'invention, pour émettre l'onde d'excitation, la source 2 peut par exemple générer une onde modulée spatialement dans le milieu et déplacer ladite onde modulée spatialement dans le milieu avec une vitesse prédéfinie, par exemple une vitesse prédéfinie constante.

La période temporelle prédéfinie peut alors être déterminée à partir de la vitesse de déplacement et de la période spatiale de l'onde électromagnétique modulée spatialement.

Dans un exemple de ce mode de réalisation, la source 2 peut par exemple générer une onde électromagnétique modulée spatialement dans le milieu en générant une figure d'interférence entre deux faisceaux laser dans le milieu.

Dans cet exemple de réalisation, la modulation périodique dans le temps d'au moins caractéristique physique est alors une modulation périodique dans le temps de l'amplitude de l'onde d'excitation.

Dans un autre mode de réalisation, la modulation périodique dans le temps d'au moins caractéristique physique peut être une modulation périodique dans le temps de la polarisation de l'onde d'excitation. Pour cela, la source 2 peut par exemple comporter un polariseur rotatif pivotant avec une fréquence de rotation correspondant à ladite période temporelle prédéfinie.

La source 2 peut ainsi par exemple comporter un ou plusieurs lasers et, le cas échéant, des actionneurs et/ou composant optiques contrôlables permettant de mettre en forme l'onde d'excitation et contrôler la modulation périodique de l'onde d'excitation. Les composants optiques peuvent notamment comprendre des moyens de générer une figure d'interférence à partir de deux faisceaux lasers tels que des lentilles et/ou des miroirs notamment. Les actionneurs peuvent notamment comprendre des moyens de déplacer une telle figure d'interférence dans le milieu avec une vitesse prédéfinie, par exemple des miroirs et/ou des lentilles motorisés en translation et/ou en rotation, ou encore des miroirs déformables.

Le réseau de transducteurs 3 comporte une pluralité de transducteurs 6, par exemple alignés selon un axe ou une direction de réseau.

Dans des variantes de réalisation, le réseau de transducteurs 3 peut être une matrice bidimensionnelle de transducteurs 6.

Dans le mode de réalisation dans lequel les ondes sont des ondes lumineuses, les transducteurs 6 peuvent par exemple être des photodétecteurs. Le réseau de transducteur 3 peut par exemple prendre la forme d'une caméra, notamment une caméra CCD ou CMOS.

Par ailleurs, le système 1 comporte un élément défléchissant contrôlable 4 qui est apte à défléchir périodiquement, en une onde défléchie, une onde de retour de la région cible R, émise en réponse à l'onde d'excitation.

Dans un premier mode de réalisation illustré sur la figure 1, l'élément défléchissant contrôlable 4 est par exemple un miroir rotatif. Un exemple de miroir rotatif est un miroir galvanométrique.

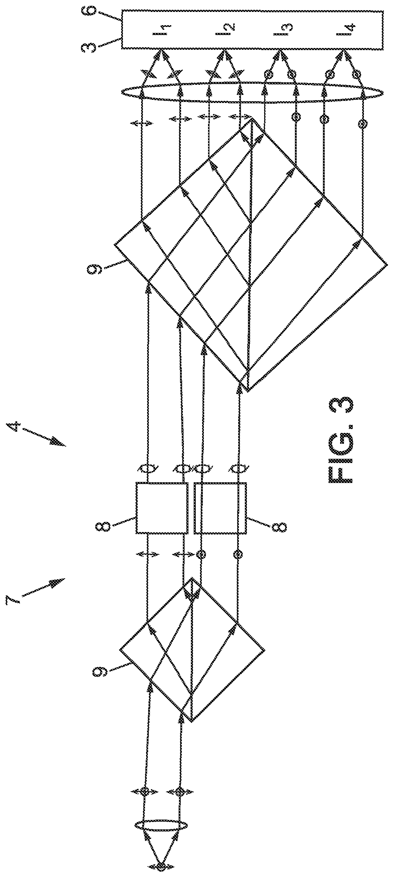

Dans une variante de réalisation illustrée sur la figure 3, l'élément défléchissant contrôlable 4 est un système fixe 7.

Par « l'élément défléchissant contrôlable est un système fixe », on entend que l'élément défléchissant contrôlable ne comporte pas de pièces en mouvement.

De cette manière, il est possible de défléchir périodiquement l'onde de retour avec des fréquences encore plus élevée que dans le cas d'un miroir rotatif, par exemple avec des fréquences de déflexion périodique allant jusqu'à plusieurs MHz.

Dans l'exemple de réalisation illustré sur la figure 3, le système fixe 7 comporte un élément de contrôle de polarisation 8 et des éléments de séparation de faisceau en fonction de la polarisation 9.

L'élément de contrôle de polarisation 8 est un élément optique à biréfringence induite. Dans un tel élément, la biréfringence peut être contrôlée par une action externe.

L'élément de contrôle de polarisation 8 peut être un élément à biréfringence induite par un champ électrique tel qu'une cellule de Pockels ou Kerr, un élément à biréfringence induite par un champ magnétique comme un modulateur magnéto-optique utilisant l'effet Faraday, l'effet Cotton-Mouton ou l'effet Kerr magnéto-optique, ou encore un élément à biréfringence induite par une contrainte mécanique par exemple utilisant un cristal photo-élastique.

Des exemples d'éléments de séparation de faisceau en fonction de la polarisation 9 sont illustrés sur la figure 3 et comprennent deux cubes séparateurs. Ces cubes permettent de séparer l'onde de retour en plusieurs faisceaux polarisés avec une perte minimal de photons.

On comprend donc qu'une modulation de la polarisation appliquée par l'élément de contrôle de polarisation 8 permet de défléchir le faisceau résultat sur les transducteurs 6.

De manière générale, l'un des intérêts du procédé et système selon l'invention est de permettre la récupération, par les transducteurs de la quasi-totalité des photons de l'onde de retour de la région cible R.

De cette manière, il est possible d'observer des fluorophores uniques dans la région cible R qui ont une durée de vie très limitée.

Les différents modes de réalisation de l'élément défléchissant contrôlable 4 détaillés ci-dessus permettent une perte minimal de photons lors de la déflexion périodique de l'onde de retour en une onde défléchie.

Le fonctionnement du système 1 va maintenant être expliqué plus en détail en se référant par ailleurs également à la figure 2 qui illustre un procédé de mesure d'un paramètre physique d'une région cible selon un mode de réalisation de l'invention.

Au cours d'une première étape du procédé selon l'invention, on émet ainsi une onde d'excitation en au moins une région cible d'un milieu, de telle sorte que ladite onde présente, à l'endroit de ladite région cible, une modulation périodique dans le temps d'au moins caractéristique physique avec une période temporelle prédéfinie.

En réponse à l'onde d'excitation, ladite région cible R émet une onde de retour.

Avantageusement, l'onde de retour présente également une modulation périodique dans le temps d'au moins caractéristique physique avec la même période temporelle prédéfinie. La modulation périodique de l'onde de retour peut toutefois présenter un décalage de phase avec la modulation périodique de l'onde excitatrice comme cela sera détaillé plus loin.

Si on considère par exemple le mode de réalisation dans lequel la région cible comporte un fluorophore et dans lequel la caractéristique physique de l'onde excitatrice modulée périodiquement est la polarisation de l'onde d'excitation. Si le fluorophore se comporte comme un émetteur dipolaire immobile, il émettra une onde de retour dont l'intensité sera fonction de la polarisation de l'onde excitatrice reçue et de l'orientation du fluorophore.

L'onde de retour présentera donc une modulation périodique dans le temps de son intensité, avec la période temporelle prédéfinie. Cette modulation périodique présentera par ailleurs un décalage de phase avec la modulation de la polarisation de l'onde incidente qui sera fonction de l'orientation du fluorophore.

Dans ce mode de réalisation, si l'on est à même de mesurer le décalage de phase entre la modulation périodique de l'onde de retour et la modulation périodique de l'onde excitatrice, il est alors possible de déterminer une information d'orientation de l'émetteur de lumière présent dans la région cible R, c'est-à-dire le fluorophore.

Considérons à présent un autre mode de réalisation dans lequel la région cible comporte également un fluorophore mais dans lequel la caractéristique physique de l'onde excitatrice modulée périodiquement est l'intensité de l'onde d'excitation.

Plus particulièrement, considérons le mode de réalisation dans lequel l'onde d'excitation est une onde modulée spatialement, déplacée dans le milieu avec une vitesse prédéfinie, par exemple une vitesse constante.

Du fait de la modulation périodique de l'intensité de l'onde excitatrice à l'endroit du fluorophore F dans la région cible R, le fluorophore F émet une onde de retour dont l'intensité est également modulée dans le temps. L'onde d'excitation étant par ailleurs modulée spatialement, le décalage de phase entre la modulation périodique de l'onde de retour et la modulation périodique de l'onde excitatrice sera fonction de la position du fluorophore F dans la région cible R modulo la périodicité spatiale de l'onde d'excitation.

Ainsi, dans ce mode de réalisation, si l'on est à même de mesurer le décalage de phase entre la modulation périodique de l'onde de retour et la modulation périodique de l'onde excitatrice, il est alors possible de déterminer une information de position de l'émetteur de lumière présent dans la région cible R, c'est-à-dire le fluorophore.

Le procédé selon l'invention comporte ainsi des étapes permettant de déterminer ledit décalage de phase avec une précision importante.

Pour cela, l'élément défléchissant contrôlable 4 défléchit périodiquement l'onde de retour de la région cible R, formant une onde défléchie.

Cette déflexion périodique est telle que ladite onde défléchie balaye le réseau de transducteurs 3 à chaque période de la modulation périodique c'est-à-dire avec la période temporelle prédéfinie appliquée à l'onde d'excitation par la source 2.

Chaque transducteur 6 du réseau de transducteurs 3 est ainsi associé à une plage de phase prédéfinie de la modulation périodique de l'onde excitatrice.

A titre d'exemple non limitatif, considérons un réseau de quatre transducteurs 6, juxtaposés les uns aux autres et balayé par l'onde défléchie à chaque période de la modulation périodique. Le premier transducteur est alors par exemple associé à une plage de phase allant de 0 degrés à 90 degrés de la modulation périodique, le second transducteur est par exemple associé à une plage de phase allant de 90 degrés à 180 degrés de la modulation périodique, le troisième transducteur est par exemple associé à une plage de phase allant de 180 degrés à 270 degrés de la modulation périodique et le quatrième transducteur est par exemple associé à une plage de phase allant de 270 degrés à 360 degrés de la modulation périodique. Les quatre transducteurs couvrent l'ensemble d'une période de la modulation périodique.

En particulier, l'onde défléchie peut balayer intégralement le réseau de transducteurs 3 à chaque période de la modulation périodique, ou seulement balayée un sous-ensemble du réseau 3 comme cela sera notamment détaillé plus bas.

On peut ensuite enregistrer, pendant au moins une période de la modulation périodique, une image de phase comprenant les signaux générés par chaque transducteur du réseau de transducteurs en réponse à l'onde défléchie. Ladite image de phase peut en particulier être enregistrée dans une mémoire du module de traitement 5.

Avantageusement, ladite image de phase peut être enregistrée pendant une pluralité de période de la modulation périodique, notamment si la période prédéfinie est inférieure au temps d'intégration des transducteurs.

Dans un mode de réalisation, les transducteurs ont par exemple un temps d'intégration de 50 millisecondes. La période prédéfinie de la modulation peut par exemple être inférieure à 5 millisecondes. L'image de phase peut alors être enregistrée avec une durée d'acquisition correspondant à au moins une dizaine de périodes de modulation de l'onde excitatrice.

Ainsi dans un mode de réalisation de l'invention, les transducteurs présentent un temps d'intégration supérieur à la période temporelle prédéfinie, en particulier supérieur à 5 fois la période temporelle prédéfinie, de préférence supérieure à 10 fois la période temporelle prédéfinie.

Chaque transducteur 6 du réseau de transducteurs 3 étant associé à une plage de phase prédéfinie de la modulation périodique de l'onde excitatrice, il est ainsi possible de déterminer, à partir de l'image de phase, un décalage de phase entre la modulation périodique de l'onde de retour et la modulation périodique de l'onde d'excitation.

Pour prendre un exemple, on peut considérer à nouveau l'exemple non limitatif détaillé ci-dessus dans lequel le réseau 3 comporte quatre transducteurs 6, juxtaposés les uns aux autres, et associés respectivement à des plages de phase de la modulation périodique de 0 à 90 degrés, 90 à 180 degrés, 180 à 270 degrés et 270 à 360 degrés.

Considérons également, à titre d'exemple, qu'un signal maximum mesuré sur les quatre transducteurs est issus du premier transducteur, c'est-à-dire associé à la plage de phase de 0 à 90 degrés de la modulation de l'onde excitatrice. Si par ailleurs la plage de phase de 0 à 90 degrés de la modulation de l'onde excitatrice correspond à un minimum de ladite modulation, on peut alors déterminer que la modulation de l'onde de retour est inversée par rapport à la modulation de l'onde excitatrice, c'est-à-dire que le décalage de phase entre la modulation périodique de l'onde de retour et la modulation périodique de l'onde d'excitation est de 180 degrés avec une marge d'erreur fonction de la largeur des plages de phase associé à chaque transducteur 6.

Cet exemple, donné pour quatre transducteurs 6, est bien évidemment généralisable à un nombre arbitraire de transducteurs, plus les plages de phase associé à chaque transducteur étant réduite, plus la précision de la mesure du décalage de phase étant élevée mais moins chaque transducteur recevant de portion de l'onde de retour, par exemple de photons. Il existe donc un optimum entre le rapport signal sur bruit du signal issu des transducteurs et la précision de la détermination du décalage de phase.

Un avantage de l'invention est toutefois de garantir une mesure de l'intégralité de l'onde de retour issue du milieu (aux pertes liées à la déflexion par l'élément défléchissant près). Ainsi, dans le cas d'une onde lumineuse, la quasi-totalité des photons issus du milieu est reçu par le réseau de transducteurs (aux pertes liées à la réflexion par le miroir rotatif près). Dans l'application aux fluorophores, qui émettent un faible nombre de photons avant de s'autodétruire, ceci permet de garantir la mesure des signaux très faibles.

Enfin, dans une dernière étape du procédé, on peut alors déterminer un paramètre physique de la région cible R à partir dudit décalage de phase comme cela a été détaillé ci-avant.

Ainsi par exemple dans le mode de réalisation dans lequel la caractéristique physique de l'onde excitatrice modulée périodiquement est la polarisation de l'onde d'excitation, on détermine une information d'orientation de l'émetteur de lumière présent dans la région cible R comme détaillé ci-avant.

Ainsi encore, dans le mode de réalisation dans lequel la caractéristique physique de l'onde excitatrice modulée périodiquement est l'intensité de l'onde d'excitation et dans lequel l'onde d'excitation est une onde modulée spatialement déplacée dans le milieu avec une vitesse prédéfinie, on détermine une information de position de l'émetteur de lumière présent dans la région cible R comme détaillé ci-avant.

Dans une variante de réalisation, on émet l'onde d'excitation de telle sorte que ladite onde présente, à l'endroit de ladite région cible, une pluralité de modulations périodique dans le temps d'au moins caractéristique physique, avec une pluralité de périodes temporelle prédéfinies respectivement associées à chaque modulations périodique de ladite pluralité de modulations périodique.

Dans ce mode de réalisation, on peut alors avantageusement défléchir périodiquement l'onde de retour en une onde défléchie de sorte à ce que chaque transducteur du réseau de transducteurs soit associé à une plage de phase prédéfinie de chaque modulation périodique de ladite pluralité de modulations périodique.

A nouveau, on peut enregistrer, sur une durée s'étendant sur au moins une période de chacune des modulations périodique, une image de phase comprenant les signaux générés par chaque transducteur du réseau de transducteurs en réponse à l'onde défléchie.

On détermine alors une pluralité de décalages de phase du milieu, chaque décalage de phase de la pluralité de décalages de phase étant respectivement déterminé relativement à une phase d'une modulation périodique respective de la pluralité de modulations périodique,

Enfin, on détermine une pluralité de paramètres physiques de ladite région cible à partir de ladite pluralité de décalages de phase de manière similaire à ce qui a été décrit ci-avant.

De cette manière, il est par exemple possible de déterminer en même temps des informations de position d'un émetteur de lumière selon plusieurs directions spatiales, par exemple X, Y, Z, on bien encore à la fois des informations de position et des informations d'orientation dudit émetteur de lumière.

Considérons enfin un mode de réalisation de l'invention dans lequel on met en œuvre une microscopie optique super-résolue d'un champ d'observation comportant plusieurs fluorophores F.

Dans ce mode de réalisation, on peut avantageusement combiner une localisation super-résolue des fluorophores avec une localisation normalement résolue, de sorte à obtenir une information de positionnement absolu des fluorophores comme cela va maintenant être décrit.

Pour cela, le procédé selon l'invention peut tout d'abord être mis en œuvre de sorte à ce que les fluorophores excités simultanément par l'onde d'excitation soient espacés les uns des autres dans le champ d'observation d'une distance minimale prédéfinie.

Un mode de réalisation permettant d'obtenir ceci peut consister à fournir un milieu comportant une densité suffisamment faible de fluorophores.

Dans un autre mode de réalisation, on peut générer l'onde d'excitation de telle sorte qu'elle excite uniquement une portion des fluorophores présents dans la région cible R, par exemple par effet stochastique.

Des procédés permettant d'obtenir des fluorophores simultanément excités qui soient espacés les uns des autres dans le champ d'observation sont connus, par exemple des méthodes « PALM » ou « STORM » mentionnées ci-avant.

Par ailleurs, le réseau de transducteurs 3 peut être une matrice bidimensionnelle de transducteurs 6 s'étendant sur une longueur et une largeur prédéfinies.

Par « longueur » et « largeur », on entend des dimensions de la matrice respectivement selon un axe longitudinal X et un axe transversal Y, perpendiculaires entre eux.

L'élément défléchissant contrôlable peut être contrôlé de sorte à balayer le réseau de transducteurs selon l'axe transversal Y à chaque période de la modulation périodique.

En particulier, l'onde défléchie peut être déplacée sur le réseau de transducteurs, à chaque balayage, d'une distance de balayage inférieure à la largeur du réseau de transducteurs, en particulier inférieure à un cinquième de la largeur du réseau de transducteurs.

Ladite distance de balayage peut notamment être inférieure à la distance minimale prédéfinie séparant les fluorophores excités simultanément dans le champ d'observation.

De cette manière, les tâches focales formées par chaque fluorophore sur le réseau de transducteurs sont séparées les unes des autres.

Il est alors possible de déterminer une information de position normalement résolue par la localisation générale des tâches focales formées par chaque fluorophore sur le réseau de transducteurs.

Il est par ailleurs possible de déterminer une information de position super-résolue, modulo la périodicité spatiale de l'onde d'excitation, par une détermination d'une différence de phase comme indiqué ci-avant.

En combinant l'information de position normalement résolue et l'information de position super-résolue, il est possible d'obtenir une information de positionnement absolu des fluorophores dans le champ d'observation avec une précision supérieure à la limite de diffraction.

Le mode de réalisation détaillé ci-avant permet d'obtenir une information de positionnement absolu des fluorophores selon la direction transversale.

Ce mode de réalisation peut être étendu au cas où l'onde d'excitation comporte une pluralité de modulations, comme détaillé ci-avant. Il est alors possible d'obtenir des informations de positionnement absolu des fluorophores selon la direction transversale, la direction longitudinale et même, le cas échéant, la direction d'épaisseur, perpendiculaire aux directions transversale et longitudinale, ou encore l'orientation des fluorophores.

De manière générale, les différents modes de réalisation décrits ci-dessus peuvent ainsi être combinés entre eux.

## Revendications

1. Procédé de mesure d'un paramètre physique d'une région cible d'un milieu, dans lequel:
- on émet une onde d'excitation en au moins une région cible d'un milieu, de telle sorte que ladite onde présente, à l'endroit de ladite région cible, une modulation périodique dans le temps d'au moins une caractéristique physique avec une période temporelle prédéfinie,
- on reçoit une onde de retour de ladite région cible, émise en réponse à l'onde d'excitation,
**caractérisé en ce que** :
- on défléchit périodiquement ladite onde de retour en une onde défléchie, au moyen d'un élément défléchissant contrôlable (4), de sorte à ce que ladite onde défléchie balaye un réseau de transducteurs (3) à chaque période de la modulation périodique, chaque transducteur (6) du réseau de transducteurs (3) étant associé à une plage de phase prédéfinie de ladite modulation périodique,
- on enregistre une image de phase comprenant des signaux générés par chaque transducteur (6) du réseau de transducteurs (3), en réponse à l'onde défléchie, pendant au moins une période de la modulation périodique,
- on détermine, à partir de ladite image de phase, un décalage de phase entre une modulation périodique dans le temps d'au moins caractéristique physique de l'onde de retour et la modulation périodique dans le temps d'au moins caractéristique physique de l'onde d'excitation,
- on détermine un paramètre physique de ladite région cible à partir dudit décalage de phase.

2. Procédé selon la revendication 1, dans lequel les ondes sont des ondes électromagnétiques, notamment des ondes lumineuses.

3. Procédé selon la revendication 2, dans lequel les transducteurs (6) sont des photodétecteurs, notamment une caméra.

4. Procédé selon l'une quelconque des revendications 1 à 3, dans lequel la modulation périodique dans le temps d'au moins caractéristique physique est une modulation périodique dans le temps de la polarisation de l'onde d'excitation et dans lequel le paramètre physique de ladite région cible est une information d'orientation d'un émetteur de lumière présent dans ladite région cible, notamment un fluorophore.

5. Procédé selon l'une quelconque des revendications 1 à 3, dans lequel la modulation périodique dans le temps d'au moins caractéristique physique est une modulation périodique dans le temps de l'amplitude de l'onde d'excitation et dans lequel le paramètre physique de ladite région cible est une information de temps de vie ou une information de position d'un émetteur de lumière présent dans ladite région cible, notamment un fluorophore.

6. Procédé selon la revendication 5, dans lequel, pour émettre l'onde d'excitation, on génère une onde modulée spatialement dans le milieu et on déplace ladite onde modulée spatialement dans le milieu, notamment avec une vitesse prédéfinie constante,
en particulier dans lequel on génère une onde électromagnétique modulée spatialement dans le milieu en générant une figure d'interférence entre deux faisceaux laser dans le milieu.

7. Procédé selon l'une quelconque des revendications 1 à 6,
dans lequel on émet ladite onde d'excitation, de telle sorte que ladite onde présente, à l'endroit de ladite région cible, une pluralité de modulations périodique dans le temps d'au moins caractéristique physique, avec une pluralité de périodes temporelle prédéfinies respectivement associées à chaque modulations périodique de ladite pluralité de modulations périodique,
dans lequel on défléchit périodiquement l'onde de retour en une onde défléchie de sorte à ce que chaque transducteur (6) du réseau de transducteurs (3) soit associé à une plage de phase prédéfinie de chaque modulation périodique de ladite pluralité de modulations périodique,
dans lequel on détermine une pluralité de décalages de phase du milieu, chaque décalage de phase de la pluralité de décalages de phase étant respectivement déterminé entre une modulation périodique dans le temps d'au moins caractéristique physique de l'onde de retour et une modulation périodique dans le temps d'au moins caractéristique physique respective de l'onde d'excitation,
et dans lequel on détermine une pluralité de paramètres physiques de ladite région cible à partir de ladite pluralité de décalages de phase.

8. Procédé selon la revendication 7, dans lequel ladite pluralité de paramètres physiques de ladite région cible comprend au moins une information de position et/ou d'orientation et/ou de temps de vie d'un émetteur de lumière présent dans ladite région cible, notamment un fluorophore.

9. Système (1) de mesure d'un paramètre physique d'une région cible d'un milieu comprenant :
- une source (2) d'onde d'excitation apte à émettre une onde d'excitation en au moins une région cible d'un milieu, de telle sorte que ladite onde présente, à l'endroit de ladite région cible, une modulation périodique dans le temps d'au moins une caractéristique physique avec une période temporelle prédéfinie,
- un réseau de transducteurs (3),
**caractérisé en ce qu'**il comporte en outre :
- un élément défléchissant contrôlable (4) apte à défléchir périodiquement, en une onde défléchie, une onde de retour de ladite région cible émise en réponse à l'onde d'excitation,
de sorte à ce que ladite onde défléchie balaye le réseau de transducteurs (3) à chaque période de la modulation périodique, chaque transducteur (6) du réseau de transducteurs (3) étant associé à une plage de phase prédéfinie de ladite modulation périodique,
- un module de traitement (5) comportant :
une mémoire apte à enregistrer une image de phase comprenant les signaux générés par chaque transducteur (6) du réseau de transducteurs (3), en réponse à l'onde défléchie, pendant au moins une période de la modulation périodique,
un processeur apte à déterminer, à partir de ladite image de phase, un décalage de phase de l'onde de retour issue de ladite région cible par rapport à une phase de la modulation périodique de l'onde d'excitation, et de déterminer un paramètre physique de ladite région cible à partir dudit décalage de phase.

10. Système (1) de mesure selon la revendication 9, dans lequel l'élément défléchissant contrôlable (4) est un miroir rotatif.

11. Système (1) de mesure selon la revendication 9, dans lequel l'élément défléchissant contrôlable (4) est un système fixe (7) comprenant au moins un élément de contrôle de polarisation (8), notamment un élément optique à biréfringence induite en particulier à biréfringence induite par un champ électrique, un champ magnétique ou une contrainte mécanique.

## Patentansprüche

1. Verfahren zur Messung eines physikalischen Parameters eines Zielbereichs eines Mediums, bei welchem:
- man eine Erregungswelle in mindestens einen Zielbereich eines Mediums aussendet, sodass die Welle an der Position des Zielbereichs eine zeitabhängige periodische Modulation mindestens eines physikalischen Merkmals mit einer vorbestimmten zeitlichen Periode aufweist,
- man eine reflektierte Welle vom Zielbereich empfängt, welche in Reaktion auf die Erregungswelle ausgesendet wird, **dadurch gekennzeichnet, dass**:
- man periodisch die reflektierte Welle als eine abgelenkte Welle ablenkt, mithilfe eines steuerbaren Ablenkelements (4), sodass die abgelehnte Welle ein Netzwerk von Umformern (3) bei jeder Periode der periodischen Modulation abtastet, wobei jeder Umformer (6) des Netzwerks von Umformern (3) einem vorbestimmten Phasenbereich der periodischen Modulation zugeordnet ist,
- man ein Phasenbild aufzeichnet, beinhaltend Signale, welche durch jeden Umformer (6) des Netzwerks von Umformern (3) in Reaktion auf die abgelenkte Welle während mindestens einer Periode der periodischen Modulation erzeugt werden,
- man anhand des Phasenbildes eine Phasenverschiebung zwischen einer zeitabhängigen periodischen Modulation mindestens eines physikalischen Merkmals der reflektierten Welle und der zeitabhängigen periodischen Modulation mindestens eines physikalischen Merkmals der Erregungswelle bestimmt,
- man einen physikalischen Parameter des Zielbereichs anhand der Phasenverschiebung bestimmt.

2. Verfahren nach Anspruch 1, bei welchem die Wellen elektromagnetische Wellen sind, insbesondere Lichtwellen.

3. Verfahren nach Anspruch 2, bei welchem die Umformer (6) Photodetektoren sind, insbesondere eine Kamera.

4. Verfahren nach einem der Ansprüche 1 bis 3, bei welchem die zeitabhängige periodische Modulation mindestens eines physikalischen Merkmals eine zeitabhängige periodische Modulation der Polarisation der Erregungswelle ist, und bei welchem der physikalische Parameter des Zielbereichs eine Information zur Ausrichtung eines Senders ist, welcher im Zielbereich vorhanden ist, insbesondere eines Fluorophors.

5. Verfahren nach einem der Ansprüche 1 bis 3, bei welchem die zeitabhängige periodische Modulation mindestens eines physikalischen Merkmals eine zeitabhängige periodische Modulation der Amplitude der Erregungswelle ist, und bei welchem der physikalische Parameter des Zielbereichs eine Information zur Lebensdauer oder eine Information zur Position eines Senders ist, welcher im Zielbereich vorhanden ist, insbesondere eines Fluorophors.

6. Verfahren nach Anspruch 5, bei welchem, zum Aussenden der Erregungswelle, man eine räumlich modulierte Welle in einem Medium erzeugt und man die räumlich modulierte Welle in dem Medium bewegt, insbesondere bei einer vorbestimmten konstanten Geschwindigkeit,
wobei man insbesondere eine räumlich modulierte elektromagnetische Welle in dem Medium erzeugt, indem man ein Interferenzmuster zwischen zwei Laserstrahlen in dem Medium erzeugt.

7. Verfahren nach einem der Ansprüche 1 bis 6, bei welchem man die Erregungswelle in einer Weise aussendet, dass die Welle an der Position des Zielbereichs eine Vielzahl zeitabhängiger periodischer Modulationen mindestens eines physikalischen Merkmals aufweist, mit einer Vielzahl von vorbestimmten zeitlichen Perioden, welche jeweils jeder periodischen Modulation der Vielzahl von periodischen Modulationen zugeordnet ist,
wobei man periodisch die reflektierte Welle als eine abgelenkte Welle in einer Weise ablenkt, dass jeder Umformer (6) des Netzwerks von Umformern (3) einem vorbestimmten Phasenbereich einer jeden periodischen Modulation der Vielzahl von periodischen Modulationen zugeordnet ist,
wobei man eine Vielzahl von Phasenverschiebungen des Mediums bestimmt, wobei jede Phasenverschiebung der Vielzahl von Phasenverschiebungen jeweils zwischen einer zeitabhängigen periodischen Modulation mindestens eines physikalischen Merkmals der reflektierten Welle und einer zeitabhängigen periodischen Modulation mindestens eines jeweiligen physikalischen Merkmals der Erregungswelle bestimmt wird,
und wobei man eine Vielzahl von physikalischen Parametern des Zielbereichs anhand der Vielzahl von Phasenverschiebungen bestimmt.

8. Verfahren nach Anspruch 7, bei welchem die Vielzahl von physikalischen Parametern des Zielbereichs mindestens eine Information zur Position und/oder zur Ausrichtung und/oder zur Lebensdauer eines Lichtsenders beinhaltet, welcher in dem Zielbereich vorhanden ist, insbesondere eines Fluorophors.

9. System (1) zur Messung eines physikalischen Parameters eines Zielbereichs eines Mediums, Folgendes beinhaltend:
- eine Quelle (2) einer Erregungswelle, welche in der Lage ist, eine Erregungswelle in mindestens einen Zielbereich eines Mediums auszusenden, sodass die Welle an der Position des Zielbereichs eine zeitabhängige periodische Modulation mindestens eines physikalischen Merkmals mit einer vorbestimmten zeitlichen Periode aufweist,
- ein Netzwerk von Umformern (3), **dadurch gekennzeichnet, dass** es zudem Folgendes beinhaltet:
ein steuerbares Ablenkelement (4), welches in der Lage ist, periodisch als eine abgelenkte Welle eine reflektierte Welle des Zielbereichs, welche in Reaktion auf die Erregungswelle ausgesendet wird, in einer Weise abzulenken, dass die abgelegte Welle das Netzwerk von Umformern (3) bei jeder Periode der periodischen Modulation abtastet, wobei jeder Umformer (6) des Netzwerks von Umformern (3) einem vorbestimmten Phasenbereich der periodischen Modulation zugeordnet ist,
- ein Bearbeitungsmodul (5), Folgendes beinhaltend:
einen Speicher, welcher in der Lage ist, ein Phasenbild aufzuzeichnen, beinhaltend die Signale, welche durch jeden Umformer (6) des Netzwerks von Umformern (3) in Reaktion auf die abgelenkte Welle während mindestens einer Periode der periodischen Modulation erzeugt werden,
einen Prozessor, welcher in der Lage ist, anhand des Phasenbildes eine Phasenverschiebung der aus dem Zielbereich stammenden reflektierten Welle in Bezug auf eine Phase der periodischen Modulation der Erregungswelle zu bestimmen, und einen physikalischen Parameter des Zielbereichs anhand der Phasenverschiebung zu bestimmen.

10. System (1) zur Messung nach Anspruch 9, bei welchem das steuerbare Ablenkelement (4) ein drehbarer Spiegel ist.

11. System (1) zur Messung nach Anspruch 9, bei welchem das steuerbare Ablenkelement (4) ein festes System (7) ist, welches mindestens ein Polarisationssteuerelement (8) beinhaltet, insbesondere ein optisches Element mit induzierter Doppeltbrechung, insbesondere mit durch ein elektrisches Feld, ein magnetisches Feld oder durch eine mechanische Spannung induzierter Doppeltbrechung.

## Claims

1. A method for measuring a physical parameter of a target region of a medium, wherein:
- an excitation wave is emitted into at least one target region of a medium, such that said wave has, in the location of said target region, a periodic modulation over time of at least one physical characteristic with a predefined temporal period,
- a return wave, emitted in response to the excitation wave, is received from said target region,
**characterized in that**
- said return wave is periodically deflected into a deflected wave by means of a controllable deflecting element (4), so that said deflected wave scans a transducer array (3) in each period of the periodic modulation, each transducer (6) of the transducer array (3) being associated with a predefined phase range of said periodic modulation,
- a phase image comprising signals generated by each transducer (6) of the transducer array (3), in response to the deflected wave, is recorded during at least one period of the periodic modulation,
- a phase shift between a periodic modulation over time of at least one physical characteristic of the return wave and the periodic modulation over time of at least one physical characteristic of the excitation wave is determined from said phase image,
- a physical parameter of said target region is determined from said phase shift.

2. The method as claimed in claim 1, wherein the waves are electromagnetic waves, in particular light waves.

3. The method as claimed in claim 2, wherein the transducers (6) are photodetectors, in particular a camera.

4. The method as claimed in any one of claims 1 to 3, wherein the periodic modulation over time of at least one physical characteristic is a periodic modulation over time of the polarization of the excitation wave and wherein the physical parameter of said target region is information on the orientation of a light emitter present in said target region, in particular a fluorophore.

5. The method as claimed in any one of claims 1 to 3, wherein the periodic modulation over time of at least one physical characteristic is a periodic modulation over time of the amplitude of the excitation wave and wherein the physical parameter of said target region is information on the lifetime or information on the position of a light emitter present in said target region, in particular a fluorophore.

6. The method as claimed in claim 5, wherein, for the emission of the excitation wave, a wave that is spatially modulated in the medium is generated and said wave that is spatially modulated in the medium is moved, in particular with a constant predefined velocity,
in particular wherein an electromagnetic wave that is spatially modulated in the medium is generated by generating an interference pattern between two laser beams in the medium.

7. The method as claimed in any one of claims 1 to 6,
wherein said excitation wave is emitted such that said wave has, in the location of said target region, a plurality of periodic modulations over time of at least one physical characteristic, with a plurality of predefined temporal periods associated with each periodic modulation of said plurality of periodic modulations, respectively,
wherein the return wave is periodically deflected into a deflected wave so that each transducer (6) of the transducer array (3) is associated with a predefined phase range of each periodic modulation of said plurality of periodic modulations,
wherein a plurality of phase shifts of the medium is determined, each phase shift of the plurality of phase shifts being determined between a periodic modulation over time of at least one physical characteristic of the return wave and a periodic modulation over time of at least one respective physical characteristic of the excitation wave, respectively,
and wherein a plurality of physical parameters of said target region is determined from said plurality of phase shifts.

8. The method as claimed in claim 7, wherein said plurality of physical parameters of said target region comprises at least information on the position and/or orientation and/or lifetime of a light emitter present in said target region, in particular a fluorophore.

9. A system (1) for measuring a physical parameter of a target region of a medium comprising:
- an excitation-wave source (2) able to emit an excitation wave into at least one target region of a medium, such that said wave has, in the location of said target region, a periodic modulation over time of at least one physical characteristic with a predefined temporal period,
- a transducer array (3),
**characterized in that** it further comprises:
- a controllable deflecting element (4) that is able to periodically deflect, into a deflected wave, a return wave of said target region emitted in response to the excitation wave,
so that said deflected wave scans the transducer array (3) in each period of the periodic modulation, each transducer (6) of the transducer array (3) being associated with a predefined phase range of said periodic modulation,
- a processing module (5) including:
a memory able to record a phase image comprising the signals generated by each transducer (6) of the transducer array (3), in response to the deflected wave, during at least one period of the periodic modulation,
a processor able to determine, from said phase image, a phase shift of the return wave output from said target region with respect to a phase of the periodic modulation of the excitation wave, and to determine a physical parameter of said target region from said phase shift.

10. The measuring system (1) as claimed in claim 9, wherein the controllable deflecting element (4) is a rotatable mirror.

11. The measuring system (1) as claimed in claim 9, wherein the controllable deflecting element (4) is a fixed system (7) comprising at least one polarization-controlling element (8), in particular an induced-birefringence optical element, in particular an induced-birefringence optical element the birefringence of which is induced via an electric field, a magnetic field or a mechanical stress.
